# EUROPÄISCHE PATENTANMELDUNG

(11) **EP 1 533 192 A1**
(43) Veröffentlichungstag der Anmeldung: **25.05.2005**
(21) Anmeldenummer: 04405655.4
(22) Anmeldetag: 21.10.2004
(51) Int. Cl.: B60R 19/34

(54) **Stossfängersystem**

(30) Priorität: 19.11.2003 DE 10354239; 22.12.2003 DE 10361092; 23.02.2004 DE 102004008741
(71) Anmelder: Alcan Technology & Management Ltd., 8212 Neuhausen am Rheinfall (CH)
(72) Erfinder: Liebhard, Oliver, 8400 Winterthur (CH); Gehrig, Markus, 8200 Schaffhausen (CH); Leppin, Christian, 8200 Schaffhausen (CH)

(57) **Zusammenfassung**

Bei einer Stoßstange (10) werden die Crash-Boxen (14) zumindest teilweise vom Hohlraum eines Querträgerhohlraumprofils (12) aufgenommen. Dadurch kommt es bei einem Aufprallereignis bereits frühzeitig zu einer Verformung der Crash-Box (14), so dass bei gleicher Außendimensionierung der Stoßstange (10) längere Crash-Boxen (14) verwendet werden können. Dies ist von Vorteil, da durch das Zusammendrücken des Querträgers (12) im Verhältnis zu der dazu eingesetzten Masse und des zurückgelegten Weges gegenüber der Verhältnisse bei Crash-Boxen (14) wenig Energie absorbiert wird. Das Energieabsorptionsvermögen der vorgeschlagenen Stoßstange (10) ist dadurch höher, als dies bei herkömmlichen Stoßstangen der Fall ist.

## Beschreibung

Die Erfindung betrifft ein Stoßfängersystem zur Befestigung an einem Fahrzeug mit einem Querträgerelement und zumindest einem zwischen Querträgerelement und Fahrzeug angeordneten Deformationselement, das der Energiedissipation bei einem Aufprall des Fahrzeugs dient.

Bekannte Stoßfängersysteme enthalten üblicherweise einen Querträger, welcher mit Halterungen verbunden werden kann, bzw. an den Halterungen ausgebildet sind. Die Halterungen dienen der Befestigung des Stoßfängersystems beispielsweise an einem Kraftfahrzeug. Bei einem Aufprall des Fahrzeuges auf ein festes Hindernis wird der Querträger deformiert und adsorbiert dadurch Aufprallenergie. Häufig sind die Querträger als Hohlprofil ausgebildet, so dass die Absorption von Aufprallenergie durch ein Zusammenstauchen des Hohlprofils quer zu dessen Längsrichtung erfolgt. Der Querträger ist dabei so ausgelegt, dass die Kraft, bei der sich dieser zu verformen beginnt, niedriger ist als die Kraft, die zum Verformen der Fahrzeugstruktur erforderlich ist. Bei einem schwächeren Aufprall wird somit zunächst ausschließlich der Stoßfänger deformiert, so dass nur dieser auszutauschen ist. Erst bei einem heftigeren Aufprall werden auch strukturelle Teile des Fahrzeugs mit deformiert.

Um die maximale Aufprallenergie, bei der es noch nicht zu einer Verformung von Fahrzeugstrukturen kommt, zu erhöhen, wurden in der Vergangenheit bereits Deformationselemente, sogenannte "Crash-Boxen" vorgeschlagen. Diese werden zwischen dem Querträger bzw. dessen Halterungen und dem Fahrzeug (z. B. dessen Längsträgern) angeordnet. Bei einem Aufprall werden die Deformationselemente sowie der Querträger deformiert und absorbieren dadurch Aufprallenergie. Die Deformationselemente sind meist als Hohlkammerprofile (häufig auch als Mehrkammerhohlprofile) ausgebildet, wobei deren Längsachse in Richtung der Fahrzeuglängsachse liegt.

In der Regel wurden bei bekannten Stoßfängersystemen mit Deformationselementen die Querträger, die Deformationssysteme sowie die Fahrzeugstruktur (z.B. Längsträger) derart aufeinander angepasst, dass bei einem Aufprallereignis sich zunächst ausschließlich der Querträger verformt, erst anschließend die Deformationselemente verformen, und es erst zuletzt zu einer Deformation der Fahrzeugstruktur kommt. Dies wurde als besonders vorteilhaft in Bezug auf eventuelle Reparaturkosten angesehen, da je nach Stärke des Aufpralls nur der Querträger bzw. nur Querträger und Deformationselemente ausgetauscht werden mussten.

Die Dimensionierung eines Stoßfängersystems, insbesondere des Querträgers und der ihm zugeordneten Deformationselemente, wird durch das vorgegebene Design des Fahrzeugs - was letztendlich den Bauraum definiert - sowie das vorgeschriebene Gewicht bestimmt. Je nach Größe, Gewicht und Lage der einzelnen Elemente des Stoßfängersystems im Bauraum, weist dieses ein größeres oder kleineres Energieabsorptionsvermögen bei einem Aufprallereignis auf, ohne dass es zu einer Verformung der strukturellen Teile des Fahrzeugs selbst kommt.

Ist nun beispielsweise der für das Stoßfängersystem zur Verfügung gestellte Bauraum eines Fahrzeugs kleiner als bei bisherigen Fahrzeugen, so müssen die Stoßfängersysteme und mit ihnen insbesondere die Querträger und Deformationselemente neu dimensioniert werden, was in der Regel zu einer Verringerung des Energieabsorptionsvermögens bei einem Aufprallereignis führt, so dass die Stoßfängersysteme unter Umständen gewisse Sicherheitstests, welche für Ihre Zulassung notwendig sind, nicht mehr bestehen. Andererseits kann es auch vorkommen, dass für Fahrzeuge mit gleichbleibendem Bauraum für das Stoßfängersystem, ein Stoßfängersystem mit verbessertem Energieabsorbtionsvermögen eingesetzt werden muss. In diesem Fall kann die Erhöhung des Energieabsorptionsvermögens in der Regel nicht durch eine größere Dimensionierung bisheriger Stoßfängersysteme erreicht werden.

Aufgabe der Erfindung ist es, bekannte Stoßfängersysteme dahingehend weiter zu entwickeln, dass diese eine höhere Aufprallenergie zu absorbieren vermögen, ohne dass es zu einer unmäßigen Vergrößerung der Abmessungen oder des Gewichts der mit dem Stoßfängersystem versehenen Fahrzeuge kommt. Weiterhin soll ein weiterentwickeltes Stoßfängersystem auch für Fahrzeuge mit verkleinertem Bauraum für das Stoßfängersystem geeignet sein, ohne dass das Energieabsorptionsvermögen bei einem Aufprallereignis im Vergleich zu herkömmlichen Stoßfängersystemen bedeuteten reduziert wird. Zudem sollen Herstellung und Handhabung des Stoßfängersystems sehr einfach sein.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Es wird vorgeschlagen, ein Stoßfängersystem zur Befestigung an einem Fahrzeug mit wenigstens einem Querträgerelement und zumindest einem zwischen Querträgerelement und Fahrzeug angeordneten Deformationselement, das der Energiedissipation bei einem Aufprall des Fahrzeugs dient, dahingehend weiterzubilden, dass zumindest ein der Deformation dienender Teilbereich zumindest eines Deformationselements über die dem Fahrzeug zugewandte Begrenzungsfläche des Querträgerelements hinausreicht.

Dem vorgeschlagenen Aufbau liegt die Erkenntnis zugrunde, dass durch eine Verformung des Querträgers im Verhältnis zu der dazu eingesetzten Masse und des zurückgelegten Weges relativ wenig Energie adsorbiert wird. Demgegenüber absorbiert ein Deformationselement über dieselbe Strecke bedeutend mehr Energie als dies bei einem Querträger der Fall ist. Die Energiedichte eines Deformationselements ist also höher als diejenige des Querträgers.

Ferner liegt dem vorgeschlagenen Aufbau die weitere Erkenntnis zu Grunde, dass es möglich ist ein stark energieabsorbierendes Stoßfängersystem zu fertigen, bei dem es nicht erforderlich ist, dass der Querträger durch plastische Verformung Energie absorbieren muss. Vielmehr ist es möglich, dass die Energieabsorption durch plastische Verformung bei einem Aufprallereignis im Wesentlichen alleine von den Deformationselementen getragen wird, und der Querträger - im Gegensatz zu bisherigen Stoßfängersystemen - nicht länger dazu vorgesehen ist, Energieabsorption durch plastische Verformung wahrzunehmen. Vielmehr ist es möglich, dass der Querträger ausschließlich die Funktion eines Biegebalkens hat.

Durch den vorgeschlagenen Aufbau wird die Länge des Deformationselements insbesondere um die Wegstrecke verlängert, um die das Deformationselement über die dem Fahrzeug zugewandte Begrenzungsfläche des Querträgerelements hinausreicht, ohne dass die äußeren Abmessungen des Stoßfängersystems vergrößert werden müssten. Bei einem Aufprallereignis wird infolgedessen auf diesem Wegstück bereits das Deformationselement gefaltet, womit eine höhere Energieabsorption bei gleichbleibender Größe des Stoßfängersystems erreicht wird.

Durch eine entsprechende Ausbildung und Dimensionierung von Querträgerelement und Deformationselement (insbesondere bezüglich der Wandstärken) in dem Bereich, in dem das Deformationselement im Querträgerelement eingelassen ist, kann ein im Wesentlichen konstantes Kraftverhalten über die gesamte Länge der Deformation (also auch außerhalb des eingelassenen Bereichs) realisiert werden. Obgleich bei einem Aufprall oftmals die gesamte Stoßfängeranordnung ausgetauscht werden muss, und es bei sehr schwachen Aufprallereignissen oft nicht mehr genügt, nur das Querträgerelement auszutauschen, kann sich das vorgeschlagene Stoßfänsystem dennoch als vorteilhaft erweisen, da es eine geringere Dimensionierung erfordert, somit mit weniger Materialaufwand und einfacher herstellbar ist und das Gewicht des Stoßfängersystems niedriger ausgeführt werden kann.

Von Vorteil ist es, wenn das Querträgerelement und/oder das Deformationselement zumindest bereichsweise als Hohlprofil ausgebildet ist. Im vorgeschlagenen Fall kann auf bekannte Elemente und bereits vorhandene Fabrikationsmaschinen zurückgegriffen werden. So kann es sich zum Einlassen des Deformationselements in das Querträgerelement als ausreichend erweisen, einen entsprechenden Bereich an der Rückseite des Querträgerelements auszunehmen, beispielsweise durch Ausoder Abfräsen bzw. Aus- oder Abschneiden, oder durch Ausführen eines insbesondere schräggeführten Schnittes, z. B. mittels Sägen, Laserschneiden, Wasserstrahlschneiden und /oder Stanzen. Das bzw. die Hohlprofile können beispielsweise Extrusionsprofile, Gussprofile oder aus einem oder mehreren Blechteilen geformte und/oder gefügte Profile sein.

Insbesondere in diesem Zusammenhang kann die Erfindung dadurch realisiert werden, dass zumindest Teile zumindest eines Deformationselements zumindest teilweise in das Querträgerelement eingreifen. Durch den beispielsweise durch Fräsen, Sägen, Laserschneiden, Wasserstrahlschneiden und/oder Stanzen geschaffenen Zugang kann auf einfache Weise ein Einlassen des Deformationselements erfolgen. Zusätzlich oder unabhängig davon ist auch ein Umgreifen denkbar.

Möglich ist es, das Deformationselement und/oder das Querträgerelement mehrstückig auszubilden. Dadurch ist gegebenenfalls eine besonders gute Anpassung an die Erfordernisse möglich.

Ebenso kann es sich als vorteilhaft erweisen, das Deformationselement und/oder das Querträgerelement einstückig auszubilden, insbesondere als extrudiertes Bauteil auszubilden. In diesem Fall kann die Herstellung des entsprechenden Bauteils gegebenenfalls besonders einfach und kostengünstig erfolgen.

Vorzugsweise ist das Deformationselement und/oder das Querträgerelement zumindest bereichsweise als Einkammerhohlprofil und/oder Mehrkammerhohlprofil ausgebildet. Beim Deformaltionselement handelt es sich bevorzugt um ein Ein- oder Mehrkammerhohlprofil mit in Fahrzeuglängsrichtung verlaufender Profilachse, welches durch Einwirken von Deformationskräften auf seine Stirnflächen unter balgartigem Zusammenfalten in Fahrzeuglängsrichtung gestaucht wird. Dabei sind vorzugsweise zwei Deformationselemente außenmittig in den Endbereichen des Querträgerelements vorgesehen. Insbesondere im Falle von Mehrkammerhohlprofilen kann speziell bei Deformationselementen ein weitgehend konstanter Kraftverlauf bei einer Deformation des entsprechenden Elementes realisiert werden, da durch die vorgeschlagene Ausbildung Kraftspitzen im Kraftwegdiagramm vermindert werden. Dies ist von Vorteil, da für das Auftreten von Schäden an der hinter dem Aufprallsystem angeordneten Fahrzeugstruktur (z. B. Längsträger) die maximal auftretenden Kraftspitzen und nicht unbedingt der Kraftverlauf als solches von Bedeutung ist.

Gemäß einer bevorzugten Ausgestaltung der Erfindung verläuft die Profilrichtung des Querträgerelements zumindest in Teilbereichen quer, vorzugsweise im Wesentlichen senkrecht, zur Richtung der Längserstreckung des Querträgerelements. Möglich ist es, dass die Profilkammern des beispielsweise Extrusionsprofils lediglich zu dessen Stirnseite hin offen sind. Die Deformationselemente können hierbei bevorzugt in Längsrichtung extrudierte Ein- oder Mehrkammerhohlprofile sein.

Ebenso kann es sich als vorteilhaft erweisen, wenn die Profilrichtung des Querträgerelements zumindest in Teilbereichen quer, bevorzugt im Wesentlichen senkrecht zur Fahrzeuglängsrichtung - und damit in aller Regel quer bzw. im Weseitlichen senkrecht zu den Deformationselementen - verläuft. Möglich ist es dabei, dass die Profilrichtung des beispielsweise als Ein- oder Mehrkammerprofil ausgebildeten Querträgerelements im Wesentlichen in Querträgerlängsrichtung verläuft. Besonders vorteilhaft kann es aber auch sein, wenn die Profilrichtung sowohl quer, insbesondere im Wesentlichen senkrecht, zur Fahrzeuglängsrichtung, als auch quer, insbesondere im Wesentlichen senkrecht, zur Richtung der Längserstrechung des Querträgerelements angeordnet ist. Ein derartiges Querträgerelement kann beispielsweise als Mehrkammerhohlprofil mit fachwerkartigem Aufbau ausgebildet sein, welches eine zur Fahrzeugaußenseite orientierte äußere Seitenfläche und eine zum Fahrzeug hin orientierten inneren Seitenfläche aufweist, wobei die Profilkammern des Mehrkammerhohlprofils des Querträgerelements zur oberen und unteren Profilfläche hin offen sind. Die Deformationselemente können gemäß dieser Ausführung vorteilhafterweise in Längsrichtung extrudierte Ein- oder Mehrkammerhohlprofile sein, welche über die innere Seitenfläche (entspricht der dem Fahrzeug zugewandten Begrenzungsfläche) des Querträgerelements hinausreichen und in das Querträgerelement eingreifen. Die Ausnehmungen für den Einschub der Deformationselemente im Querträgerelement können bei dieser Ausführungsform integral in das Querträgerelement mit extrudiert sein. Möglich ist es selbstverständlich auch, gesonderte Deckelemente für die Ober- und Unterseite des Mehrkammerhohlprofils vorzusehen.

Bevorzugterweise befindet sich die Stirnseite zumindest eines Teils zumindest eines Deformationselements in Anlage mit der vorderen bzw. einer inneren Begrenzungsfläche des trägerelements, oder aber in dessen unmittelbarer Nähe. Als innere Begrenzungsflächen sind beispielsweise Zwischenstege bei Mehrkammerprofilen zu nennen. Durch die vorgeschlagene Weiterbildung können die Deformationswege des Deformationselements besonders groß gewählt werden. Zusätzlich ist es auch möglich, die Befestigung zwischen Querträgerelement und Deformationselement mit relativ geringer Festigkeit auszubilden.

Eine Verbindung zwischen zumindest einem, vorzugsweise beiden Deformationselementen und dem Querträgerelement kann fest erfolgen ("unlösbar"), insbesondere durch Nieten, Schweißen oder Kleben. Dadurch kann ein dauerhafter Verbund der Stoßfängeranordnung realisiert werden.

Möglich ist es jedoch auch, dass zumindest ein, vorzugsweise beide Deformationselemente abnehmbar mit dem Querträgerelement verbunden sind, wie insbesondere durch Schrauben. Eine solche Abnehmbarkeit kann sich beispielsweise bei einer Beschädigung lediglich des Querträgerelements als sinnvoll erweisen.

Von Vorteil ist es, wenn zumindest ein Deformationselement eine Triggereinrichtung aufweist, welche derart ausgebildet ist, dass sie die zum Auslösen des Deformationsvorganges erforderliche Initialkraft verringert. Diese Initialkraft, also die Kraft die zur erstmaligen Auslösung des Faltvorgangs bei einem Aufprallereignis erforderlich ist, ist in der Regel besonders groß und äußert sich daher üblicherweise in einer besonders hohen Kraftspitze im Kraft-Wege-Diagramm. Durch eine Verminderung dieser Kraftspitze kann die Wahrscheinlichkeit für ein Auftreten von Schäden an der hinter dem Aufprallsystem angeordneten Fahrzeugstruktur (z.B. Längsträger) verringert werden, da hierfür, wie bereits erwähnt, in erster Linie die maximal auftretenden Kraftspitzen von Einfluss sind.

Die Triggereinrichtung kann vorzugsweise von einer teilweisen Anlage von Deformationselement und Querträgerelement ausgebildet sein, insbesondere durch eine punktuelle oder eine längs einer Linie erfolgende Anlage (eindimensionale bzw. zweidimensionale Anlage). Dies kann beispielsweise durch ein abgeschrägtes Stirnende des Deformationselements (z.B. durch einen Sägeschnitt, durch Fräsen, Wasserstrahlschneiden und/oder Stanzen) erfolgen. Die entsprechende Ekke oder Kante liegt vorteilhafterweise zur Querträgermitte hin, da dadurch die freie Distanz zwischen den beiden seitlich angeordneten Auflagepunkten verringert wird und die zur Durchbiegung des Querträgers zwischen den beiden Anlagepunkten nötige Kraft erhöht wird. Dies kann von Vorteil sein, da der Querträger im Rahmen der Erfindung nicht mehr notwendigerweise dazu konzipiert ist, Energie aufzunehmen, sondern lediglich die auf ihn einwirkenden Kräfte zuverlässig auf Deformationselemente ableiten muss.

Ebenso kann es sich als vorteilhaft erweisen, wenn die Triggereinrichtung zumindest teilweise zumindest einen insbesondere ringförmig, sickenartig und/oder mäanderförmig gebogenen Bereich aufweist. Hierbei kann es sich um eine oder mehrere seitlich in das Deformationselement eingelassene Sicken handeln. Denkbar ist es auch, dass die Triggereinrichtung aus einem ringförmigen Bereich im Deformationselement besteht, welcher vorab durch Wärmebehandlung in einen gegenüber den restlichen Wandbereichen weicheren Zustand überführt wurde. Der ringförmige Bereich kann an der die Faltung induzierenden Stelle des Deformationselements, vorzugsweise im Querträger zugewandten vorderen Endabschnitt des Deformationselements liegen. Es ist selbstverständlich auch möglich, dass zwei oder mehrere der vorgenanten Triggereinrichtungen miteinander kombiniert werden.

Wenn das Querträgerelement eine energieabsorbierende Beschichtung aufweist, kann bei kleineren Aufprallereignissen eine Beschädigung der Stoßfängeranordnung vermieden werden. Auch kann gegebenenfalls die Energieweiterleitung zu den Deformationselementen hin verbessert werden. Bei der energieabsorbierenden Beschichtung kann es sich natürlich auch um eine auf das Querträgerelement aufgeklebte Schicht handeln. Die Schicht bzw. die Beschichtung kann beispielsweise ein polymerer Schaumstoff sein.

Das Stoßfängersystem ist vorzugsweise zumindest teilweise aus einem Metall gefertigt, insbesondere aus Aluminium, Aluminiumlegierung oder Stahl. Dabei können insbesondere das Querträgerelement bzw. Querträgerteile zumindest teilweise aus einem Metall, vorzugsweise aus einem der genannten Metalle bestehen. Das Querträgerelement bzw. die Querträgerteile können jedoch auch zumindest teilweise aus Kunststoff bzw. aus faserverstärktem Kunststoff hergestellt sein. Handelt es sich beim Querträger bzw. bei den Querträgerteilen um Extrusionsprofile oder Gussteile, so bestehen diese vorteilhaft aus Aluminium oder einer Aluminiumlegierung. Die Deformationselemente sind vorzugsweise aus Metall gefertigt, insbesondere aus Aluminium oder einer Aluminiumlegierung. Weist das Stoßfängersystem bzw. Teile davon (bzw. das Querträgerelement) einen modularen Aufbau auf, so können die einzelnen Baugruppen aus verschiedenen Materialien und/oder mittels unterschiedlicher Verfahren hergestellt sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine schematische Schrägsicht eines Stoßfängersystems als erstes Ausführungsbeispiel der Erfindung, bei dem die Deformationselemente noch nicht eingelassen sind,
- Fig. 2:: das in Fig. 1 dargestellte Ausführungsbeispiel mit eingelassenen Deformationselementen;
- Fig. 3:: die Verbindungszone eines zweiten Ausführungsbeispiels der Erfindung in schematischer Ansicht;
- Fig. 4:: die Verbindungszone eines dritten Ausführungsbeispiels der Erfindung in schematischer Ansicht;
- Fig. 5:: die Verbindungszone eines vierten Ausführungsbeispiels der Erfindung in schematischer Ansicht;
- Fig. 6 bis Fig. 8:: mögliche Mehrkammerprofile für die Verwendung bei Querträgern und/oder Deformationselementen;
- Fig. 9:: eine Ausbildungsform einer Stoßstange mit einer energieabsorbierenden Beschichtung (in Draufsicht);
- Fig. 10:: eine schematische Schrägansicht eines weiteren Stoßfängersystems als zusätzliches Ausführungsbeispiel der Erfindung mit eingelassenen Deformationselementen.

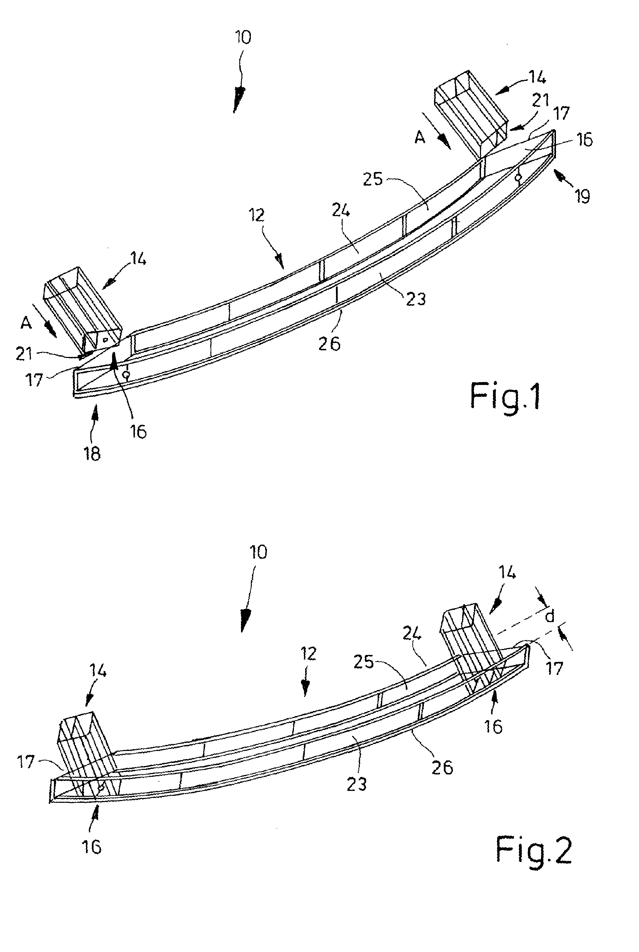

In Fig. 1 ist ein Stoßfängersystem 10 in einem noch zu montierenden Zustand dargestellt. Das Stoßfängersystem 10 besteht aus einem Querträger 12 sowie aus zwei Crash-Boxen 14 (Deformationselementen), die zur Ausbildung des fertigen Stoßfängersystems 10 in Pfeilrichtung A in entsprechend ausgebildete Aufnahmen 16 im Querträger 12 eingeschoben werden. Die Aufnahmen 16 sind an den äußeren Enden 18 und 19 des Querträgers ausgebildet.

An der der Pfeilrichtung A entgegengesetzten Seite der Crash-Boxen 14 befindet sich das in den Zeichnungen aus Übersichtlickeitsgründen nicht dargestellte Fahrzeug.

Querträger 12 und Crash-Boxen 14 sind jeweils im dargestellten Ausführungsbeispiel aus einer Aluminiumlegierung stranggepresst. Der Querträger 12 ist als Einkammerhohlprofil ausgeführt, während die Crash-Boxen 14 als Zweikammerhohlprofile ausgeführt sind. Die Aufnahmeöffnungen 17, durch die die Crash-Boxen 14 in die Aufnahmen 16 eingeführt werden können, werden beispielsweise durch einen schräg angesetzten Sägeschnitt oder durch einen Fräsvorgang gebildet. Die leichte Krümmung des Querträgers 12 kann durch einen Biegevorgang erzielt werden.

In Fig. 2 ist das Stoßfängersystem 10 in einem fertig montierten Zustand dargestellt. Die Crash-Boxen 14 sind über die Aufnahmeöffnungen 17 mit ihrem vorderen Teil in die Aufnahmen 16, welche innerhalb des Querträgers 12 ausgebildet sind, eingeschoben. Die Stirnseiten 21 der Crash-Boxen 14 befinden sich in Anlage mit der Vorderseite 23 des Querträgers 12. Querträger 12 und Crash-Boxen 14 sind mittels hier nicht weiter dargestellter Verbindungsmittel zu einer Einheit zusammengefügt. Als Verbindungsmittel eignen sich beispielsweise Nieten, Schrauben oder ein Anschweißen oder Kleben.

Da die Crash-Boxen 14 in den Querträger 12 eingelassen ("eingeschuht") sind, kommt es bei einer Verformung des Stoßfängersystems 10 bereits sehr frühzeitig zu einer Verformung auch der Crash-Boxen 14, und somit zu einer sehr starken Energiedissipation. Trotz der kompakten Dimensionierung des Stoßfängersystems 10 kann eine sehr hohe Aufprallenergie verzehrt werden, da die Crash-Boxen 14 über ihre gesamte Länge hinweg Aufprallenergie dissipieren können. Gegenüber bekannten Stoßfängersystemen, bei denen die Crash-Boxen an der Rückseite 24 des Stoßfängersystems 10 befestigt werden, wird die zusätzliche Verformungslänge d, die im Wesentlichen der Dicke des Querträgers 12 entspricht, gewonnen.

Die Oberseite 25 sowie die Unterseite 26 des Querträgerprofils 12 überschneiden sich im Anlagebereich 16 mit der Oberseite bzw. Unterseite der Crash-Boxen 14. Um durch die doppelte Materiallage in diesem Bereich keine unnötigen Kraftspitzen entstehen zu lassen, kann beispielsweise eine Materialverdünnung in diesem Bereich vorgesehen werden.

Selbstverständlich wäre es natürlich ebenso möglich, dass die entsprechenden Ober- bzw. Unterseiten 25, 26 des Querträgerprofils 12 beispielsweise durch einen Fräsvorgang entfernt sind. Die Verbindung zwischen Crash-Boxen 14 und Querträger 12 kann dann beispielsweise im Bereich der Stirnseite 21 der Crash-Boxen 14 durch einen Schweißvorgang erfolgen.

Da durch das Zusammendrücken der Crash-Boxen 14 im Verhältnis zu der eingesetzten Masse und des zurückgelegten Weges deutlich mehr Energie absorbiert wird, als dies bei einer alleinigen Verformung des Querträgers 12 der Fall wäre, absorbiert die vorgeschlagene Stoßstange 10 bei gleicher Dimensionierung bedeutend mehr Energie, als dies bei bekannten Stoßstangen der Fall ist.

Der Querträger 12 muss folglich nicht mehr dazu konzipiert werden, Energie zu verzehren. Er muss lediglich die auf ihn einwirkenden Kräfte zuverlässig auf die Crash-Box 14 ableiten.

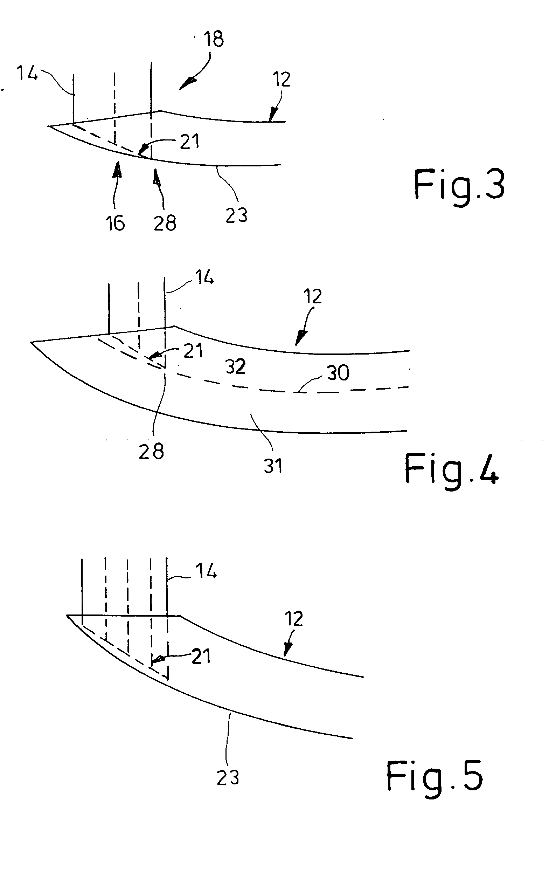

In Fig. 3 ist eine mögliche Ausführung des Anlagebereiches 16 zwischen Querträger 12 und Crash-Box 14 an einem Ende 18 eines Querträgers 12 schematisch in einer Draufsicht angedeutet.

Der Querträger 12 ist im dargestellten Ausführungsbeispiel als Einkammerhohlprofil ausgebildet, während die Crash- Box 14 aus einem Zweikammerhohlprofil besteht.

Wie der Zeichnung entnommen werden kann, ist die Neigung der Vorderfläche 23 des Querträgers 12 kleiner als die Neigung der Stirnfläche 21 der Crash-Box 14. Aufgrund der unterschiedlichen Neigungen kommt es somit im Ursprungszustand nur zu einem Kontakt längs einer Kontaktlinie 28.

Diese Bauweise wirkt als sog. Trigger, welcher die Auslösung des Faltvorganges im Aufprallereignis erleichtert. Mit Hilfe des Triggers wird die Initialkraft verringert, welche zum Auslösen des Faltvorganges erforderlich ist. Da für das Auftreten von Schäden an der hinter dem Aufprallsystem angeordneten Fahrzeugstruktur (z.B. Längsträger) die maximal auftretenden Kraftspitzen von Bedeutung sind, kann dadurch einer Verformung der Fahrzeugstruktur vorgebeugt werden.

Auch die - an sich bekannte - mehrkammerige Ausführung der Crash-Box 14 dient der Vermeidung von Kraftspitzen.

In Fig. 4 ist dargestellt, wie sich die erfinderische Idee auch auf einen Querträger 12 anwenden lässt, welcher als Mehrkammerprofil ausgebildet ist. Der Querträger 12 wird durch eine Zwischenwand 30 in eine vordere Kammer 31 sowie eine rückwärtige Kammer 32 unterteilt. Die Crash-Box 14 liegt in einem Kontaktbereich 28 mit ihrer Stirnseite 21 an der Zwischenwand 30 an.

Dadurch kann bei einer entsprechenden Dimensionierung das Stoßfängersystem bei einem schwächeren Aufprallereignis zunächst die vordere Kammer 31 des Querträgers 12 verformt werden und so Energie dissipieren. Erst wenn dies nicht mehr ausreicht, wird auch die Crash-Box 14 verformt und dissipiert dadurch Energie.

Durch eine Ausführung gemäß dem in Fig. 4 dargestellten Ausführungsbeispiel können die Vorteile konventioneller Stoßfängeranordnungen mit ihrem abgestuften Verformungsverhalten mit den Vorteilen einer verlängerten Crash-Box kombiniert werden.

In Fig. 5 ist schließlich noch dargestellt, dass es selbstverständlich ebenso möglich ist, dass sich die Stirnseite 21 der Crash-Box 14 in flächiger Anlage mit der Vorderseite 23 des Querträgers befinden kann. Die Kraftspitzen werden im dargestellten Ausführungsbeispiel durch das Vorsehen eines Vierkammerprofils verringert.

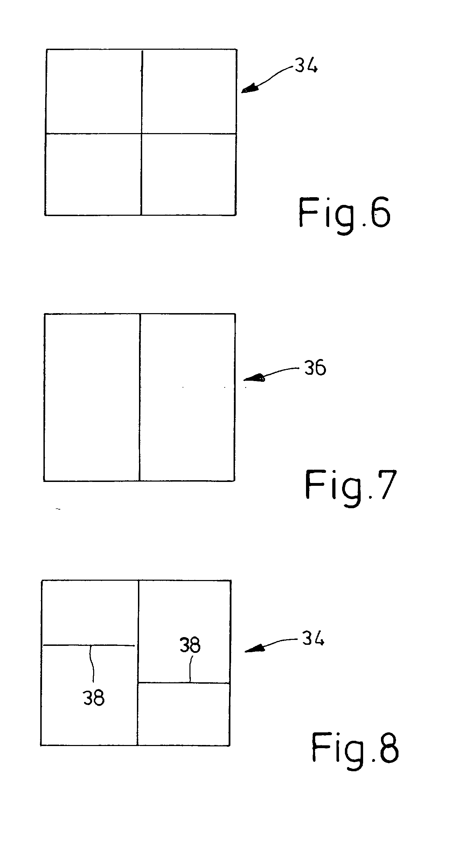

In den Fig. 6 bis 8 sind schließlich noch rein beispielhaft mögliche Ausführungen von Mehrkammerprofilen dargestellt. So zeigt Fig. 6 ein Vierkammerhohlprofil 34 und Fig.7 ein Zweikammerhohlprofil 36. In Fig. 8 ist ebenfalls ein Vierkammerhohlprofil 34 dargestellt, wobei bei diesem zwei innere Stege 38 versetzt zueinander angeordnet sind, um ein verbessertes Deformationsverhalten zu erhalten.

Die beispielhaft dargestellten Mehrkammerprofile können sowohl für die Crash-Boxen 14 als auch für den Querträger 12 verwendet werden.

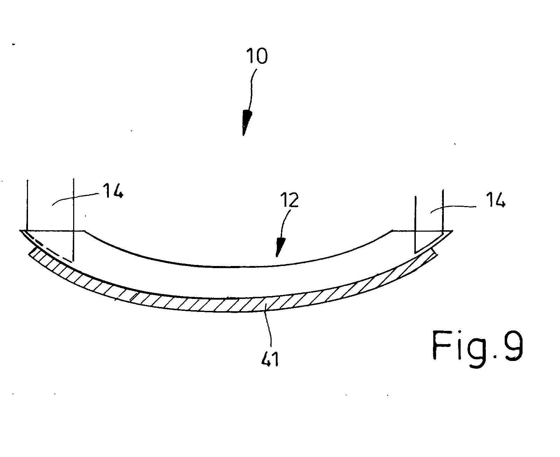

In Fig. 9 ist schließlich noch gezeigt, dass der Querträger 12 mit einer energieabsorbierenden Beschichtung 41, die auf der dem Fahrzeug abgewandten Seite der Stoßstange 10 auf dem Querträger 12 aufgebracht ist, versehen werden kann. Die energieabsorbierende Beschichtung 41 kann reversibel oder irreversibel ausgebildet sein, beispielsweise als Hartschaum oder ähnliches. Durch die absorbierende Beschichtung 41 kann es bei einem nur geringförmigen Aufprall ermöglicht werden, dass nur der Querträger 12 (mit der daran haftenden energieabsorbierenden Beschichtung) ausgetauscht werden muss, wohingegen die Crash-Boxen 14 weiter verwendet werden können.

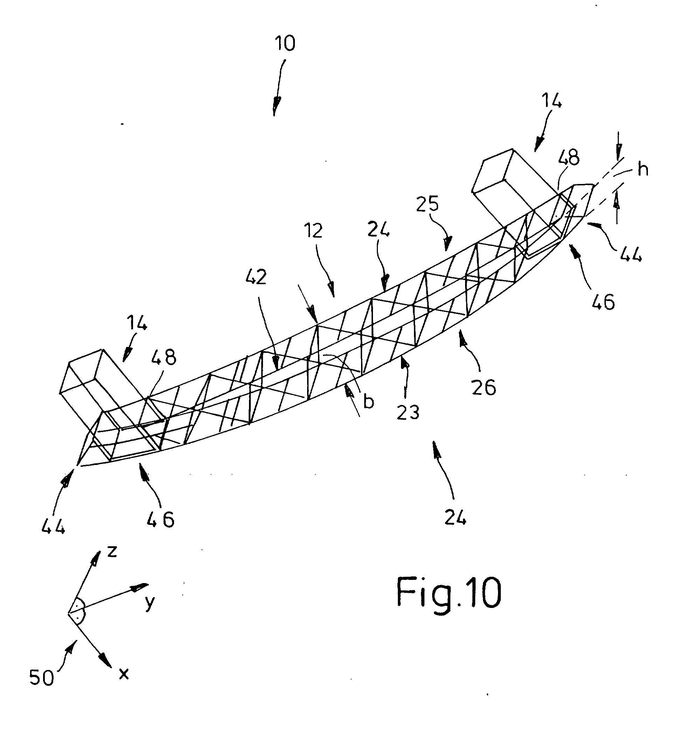

In Fig. 10 ist in perspektivischer Schrägansicht ein weiteres mögliches Stoßfängersystem 10 dargestellt, das einen Querträger 12 und zwei mit diesem verbundene Deformationselemente bzw. Crash-Boxen 14 aufweist. An der Rückseite der Crash-Boxen 14 (entgegen der Pfeilrichtung x) befindet sich das vorliegend aus Übersichtlichkeitsgründen nicht dargestellte Fahrzeug, an dem das Stoßfängersystem 10 montiert ist.

Der Querträger 12 weist zwischen seiner als Druckgurt dienenden Vorderseite 23 und seiner als Zuggurt dienenden Rückseite 24 eine Fachwerkstruktur 42 auf, die dem Querträger 12 eine große Steifigkeit verleiht. An den Seitenbereichen 44 befinden sich Verbindungsbereiche 46, in denen die Crash-Boxen 14 mit dem Querträger 12 verbunden sind. Dazu ist in dem Querträger 12 in beiden Verbindungsbereichen 46 ein Aufnahmebereich 48 vorgesehen, in den ein Teil der entsprechenden Crash-Box 14 eingeführt wird.

Der Querträger 12 ist so aufgebaut und angeordnet, dass er im Wesentlichen die gesamte Aufprallenergie an die Crash-Boxen 14 weiterleitet. Diese verzehren durch Verformungsarbeit die Aufprallenergie. Da die Crash-Boxen 14 zudem in die Aufnahmebereiche 48, und damit in das Querschnittsprofil des Querträgers 12 hinreichen, stellt das dargestellte Stoßfängersystem 10 längere Crash-Boxen 14 und damit eine verlängerte Verformungsstrecke zur Verfügung. Dies ist von Vorteil, da die Crash-Boxen 14 bei relativ geringem Materialeinsatz eine hohe energieverzehrende Wirkung aufweisen, welche insbesondere höher ist als die energieverzehrende Wirkung herkömmlicher Querträgerelemente nach dem Stand der Technik.

Der Querträger 12 ist im vorliegenden Fall aus einer Aluminiumlegierung gefertigt und in einem Extrusionsverfahren hergestellt. Die Extrusionsrichtung z und damit die Längsrichtung der von der Fachwerkstruktur 42 gebildeten Profilkammern verläuft im dargestellten Ausführungsbeispiel senkrecht zur Längserstreckung y des Querprofils 12. Die Fahrzeuglängsachse x wiederum steht senkrecht sowohl auf der Extrusionsrichtung z, als auch auf der Längsrichtung y des Querprofils. Die jeweilige Ausrichtung ist im Koordinatensystem 50 in der Fig. 10 angedeutet. x bezeichnet dabei die Längsrichtung des Fahrzeugs, y die Längserstreckung des Querträgerprofils, z die Extrusionsrichtung des Querträgers 12.

Dadurch, dass die Extrusionsrichtung z quer zur Längsstrekkung y des Querträgers 12 verläuft, kann bei dem Querträger 12 bereits während des Extrusionsverfahrens ein sich entlang der Längsrichtung y des Querträgers 12 verändernder Querschnitt (z. B. Breite b des Querträgers 12) realisiert werden, ohne dass dazu zusätzliche, im Anschluss an das Extrusionsverfahren durchzuführende Umformungsschritte erforderlich wären.

Die sich entlang der Längsrichtung y des Querträgers 12 verändernde Breite b lässt sich in Fig. 10 gut erkennen. Ebenso lassen sich die gebogene Vorderseite 23 und die Aufnahmebereiche 48 im Querträger 12 gemäß Fig. 10 ausbilden, ohne dass nach der Extrusion zusätzliche Bearbeitungsschritte erforderlich sind. Schließlich kann durch eine entsprechend ausgebildete Extrusionsmatrize auch die Stegdichte in der Fachwerkanordnung 42, die Wandstärke von Vorderseite 23, Rückseite 24 oder die Fachwerkstruktur 19 in unterschiedlichen Bereichen des Querträgers 12 unterschiedlich ausgeführt werden. Je nachdem wie der Querträger 12 extrudiert wurde, muss aus dem sich ergebenden Extrusionsprofil nur der Querträger 12 mit der Höhe h abgelängt werden, was beispielsweise durch jeweils einen Sägeschnitt an der Oberseite 25 und der Unterseite 26 des Querträgers erfolgen kann.

## Patentansprüche

1. Stoßfängersystem (10) zur Befestigung an einem Fahrzeug mit wenigstens einem Querträgerelement (12) und zumindest einem zwischen Querträgerelement (12) und Fahrzeug angeordneten Deformationselement (14), das der Energiedissipation bei einem Aufprall des Fahrzeugs dient,
**dadurch gekennzeichnet,**
**dass** zumindest ein der Deformation dienender Teilbereich zumindest eines Deformationselements (14) über die dem Fahrzeug zugewandte Begrenzungsfläche (24) des Querträgerelements (12) hinausreicht.

2. Stoßfängersystem nach Anspruch 1, **dadurch gekennzeichnet, dass** das Querträgerelement (12) und/oder das Deformationselement (14) zumindest bereichsweise als Hohlprofil ausgebildet sind/ist.

3. Stoßfängersystem nach Anspruch 1 oder 2, **dadurch gekennzeichnet, dass** zumindest Teile wenigstens eines Deformationselements (14) zumindest teilweise in das Querträgerelement (12) eingreifen (16).

4. Stoßfängersystem nach einem der vorangehenden Ansprüche, **dadurch gekennzeichnet, dass** das Deformationselement (14) und/oder das Querträgerelement (12) mehrstückig ausgebildet sind/ist.

5. Stoßfängersystem nach einem der vorangehenden Ansprüche, **dadurch gekennzeichnet, dass** das Deformationselement (14) und/oder das Querträgerelement (12) einstückig ausgebildet sind/ist, insbesondere als extrudiertes Bauteil ausgebildet sind/ist.

6. Stoßfängersystem nach einem der vorangehenden Ansprüche, **dadurch gekennzeichnet, dass** das Deformationselement (14) und/oder das Querträgerelement (12) zumindest bereichsweise als Einkammerhohlprofil und/oder Mehrkammerhohlprofil ausgebildet sind/ist (Fig. 6 bis 8).

7. Stoßfängersystem nach einem der vorangehenden Ansprüche, insbesondere nach Anspruch 2 oder 6, **dadurch gekennzeichnet, dass** die Profilrichtung (z) des Querträgerelements (12) zumindest in Teilbereichen quer, vorzugsweise im Wesentlichen senkrecht, zur Richtung der Längserstreckung (y) des Querträgerelements verläuft.

8. Stoßfängersystem nach einem der vorangehenden Ansprüche, insbesondere nach einem der Ansprüche 2, 6 oder 7,
**dadurch gekennzeichnet, dass** die Profilrichtung (z) des Querträgerelements (12) zumindest in Teilbereichen quer, vorzugsweise im Wesentlichen senkrecht, zur Richtung der Fahrzeuglängsachse (x) verläuft.

9. Stoßfängersystem nach einem der vorangehenden Ansprüche, **dadurch gekennzeichnet, dass** die Stirnseite (21) zumindest eines Teils (28) zumindest eines Deformationselements (14) sich in Anlage mit der vorderen (23) und/oder einer inneren (31) Begrenzungsfläche des Querträgerelements (12), oder in dessen unmittelbarer Nähe befindet.

10. Stoßfängersystem nach einem der vorangehenden Ansprüche, **dadurch gekennzeichnet, dass** zumindest ein, vorzugsweise beide Deformationselemente (14) fest mit dem Querträgerelement (12) verbunden sind, insbesondere durch Nieten, Schweißen oder Kleben.

11. Stoßfängersystem nach einem der vorangehenden Ansprüche, **dadurch gekennzeichnet, dass** zumindest ein, vorzugsweise beide Deformationselemente (14) lösbar mit dem Querträgerelement (12) verbunden sind, insbesondere durch Schrauben.

12. Stoßfängersystem nach einem der vorangehenden Ansprüche, **dadurch gekennzeichnet, dass** zumindest ein Deformationselement (14) eine Triggereinrichtung (28) aufweist, welche derart ausgebildet ist, dass sie die zum Auslösen des Deformationsvorganges erforderliche Initialkraft verringert.

13. Stoßfängersystem nach Anspruch 12, **dadurch gekennzeichnet, dass** zumindest eine Triggereinrichtung (28) in Form einer teilweisen Anlage von Deformationselement (14) und Querträgerelement (12) ausgebildet ist, insbesondere durch eine punktuelle oder eine längs einer Linie (28) erfolgenden Anlage.

14. Stoßfängersystem nach Anspruch 12 oder 13, **dadurch gekennzeichnet, dass** zumindest eine Triggereinrichtung zumindest bereichsweise zumindest einen insbesondere ringförmig, sickenartig und/oder mäanderförmig gebogenen Bereich aufweist.

15. Stoßfängersystem nach einem der vorangehenden Ansprüche, **dadurch gekennzeichnet, dass** das Querträgerelement (12) eine energieabsorbierende Beschichtung (40) aufweist.

16. Stoßfängersystem nach einem der vorangehenden Ansprüche, **dadurch gekennzeichnet, dass** das Stoßfängersystem (10) zumindest teilweise aus Metall gefertigt ist, insbesondere aus Aluminium, Aluminiumlegierung oder Stahl.
